# FASCICULE DE BREVET EUROPEEN

(11) **EP 1 656 983 B1**
(45) Date de publication et mention de la délivrance du brevet: **24.01.2024**
(21) Numéro de dépôt: 05292276.2
(22) Date de dépôt: 27.10.2005
(51) Int. Cl.: B01D 53/14, B01D 53/62, C10L 3/10

(54) **Procédé de désacidification d'un gaz avec une solution absorbante à régénération fractionnée**
Verfahren zur Entsäuerung eines Gases mittels einer Absorptionslösung und fraktionierter Regenerierung
Process for deacidification of a gas with an absorbing solution and fractional regeneration

(30) Priorité: 12.11.2004 FR 0412107
(43) Date de publication de la demande: 17.05.2006
(73) Titulaire: IFP Energies nouvelles, 92500 Rueil-Malmaison (FR)
(72) Inventeur: Cadours, Renaud, 69340 Francheville (FR); Carrette, Pierre-Louis, 69005 Lyon (FR); Boucot, Pierre, 69360 Ternay (FR); Mougin, Pascal, 92500 Rueil Malmaison (FR)
(74) Mandataire: IFP Energies nouvelles

(56) Documents cités:
- EP-B- 1 225 967
- FR-A5- 2 036 167
- US-A- 2 600 328
- US-A- 3 658 462
- US-A- 4 044 100
- US-A- 4 251 494

## Description

La présente invention concerne le domaine de la désacidification d'un effluent gazeux.

La désacidification des effluents gazeux tels que par exemple le gaz naturel, les gaz de synthèse, les fumées de combustion, les gaz de raffinerie, les gaz obtenus en queue du procédé Claus, les gaz de fermentation de biomasse, est généralement réalisée par lavage par une solution absorbante. La solution absorbante permet d'absorber les composés acides présents dans l'effluent gazeux. Les caractéristiques physico-chimiques de cette solution sont étroitement liées à la nature du gaz à traiter : spécification attendue sur le gaz traité, élimination sélective d'une impureté, stabilité thermique et chimique de la solution vis à vis des différents composés présents dans l'effluent gazeux à traiter.

La désacidification de ces effluents, notamment la décarbonatation et la désulfuration, impose des contraintes spécifiques à la solution absorbante :
- une sélectivité vis à vis du dioxyde de carbone par rapport à l'oxygène et à l'azote dans le cas des fumées, par rapport aux hydrocarbures dans le cas du gaz naturel,
- une stabilité thermique,
- une stabilité chimique notamment face aux impuretés de l'effluent, à savoir essentiellement l'oxygène, les SOₓ et les NOₓ, et
- une faible tension de vapeur, afin de limiter les pertes de solution absorbante en tête de la colonne de désacidification.

Les solvants les plus utilisés aujourd'hui sont les solutions aqueuses d'alcanolamine, primaire, secondaire ou tertiaire. En effet, le CO2 absorbé réagit avec l'alcanolamine présente en solution, selon une réaction exothermique réversible.

Une alternative aux solutions aqueuses d'alcanolamine est l'utilisation de solutions chaudes de carbonates. Le principe est basé sur l'absorption du CO₂ dans la solution aqueuse, suivie de la réaction chimique réversible avec les carbonates. Il est connu que l'ajout d'additifs permet d'optimiser l'efficacité du solvant.

D'autres procédés de décarbonatation par lavage avec une solution absorbante telle que par exemple le méthanol réfrigéré ou les polyéthylèneglycols, sont basés sur une absorption physique du CO₂.

Par ailleurs, le document US 2,600,328 décrit un procédé de séparation de composés acides d'un gaz. Le dioxyde de carbone et l'hydrogène sulfuré contenus dans le gaz sont absorbés par une solution absorbante. La solution absorbante riche en composés acides est séparée par décantation en une couche supérieure contenant l'hydrogène sulfuré et pratiquement pas de dioxyde de carbone et en une couche inférieure contenant le dioxyde de carbone et pratiquement pas d'hydrogène sulfuré. La couche supérieure est soutirée puis régénérée séparément de la couche inférieure afin d'obtenir séparément un effluent gaz riche en hydrogène sulfuré et un effluent gazeux riche en dioxyde de carbone. Les solutions absorbante régénérée sont recyclées.

D'une manière générale, la mise en oeuvre de toutes les solutions absorbantes décrites précédemment impose une consommation énergétique non négligeable pour la régénération de l'agent de séparation. La régénération de la solution absorbante est généralement réalisée par entraînement par un gaz vaporisé, couramment appelé « gaz de strippage ». L'énergie thermique nécessaire à la régénération est divisée en trois parties liées, au chauffage de la solution absorbante entre l'étape d'absorption et l'étape de régénération (chaleur sensible de la solution absorbante), à sa chaleur de vaporisation et à l'énergie de liaison entre l'espèce absorbée et la solution absorbante. L'énergie de liaison est d'autant plus importante que l'affinité physico-chimique entre les composés du solvant et les composés acides à éliminer est élevée. Dans le cas particulier des alcanolamines, il est plus coûteux de régénérer une alcanolamine primaire très basique telle que la MonoEthanolAmine, qu'une amine tertiaire telle que la MethylDiEthanolAmine. La chaleur de vaporisation de la solution absorbante est à prendre en compte puisque l'étape de régénération thermique nécessite la vaporisation d'une fraction non négligeable de la solution absorbante afin de réaliser l'effet de « strippage » favorisant l'élimination des composés acides contenus dans la solution absorbante. Cette fraction de solution absorbante à vaporiser est proportionnelle à l'importance de l'association entre l'impureté absorbée et la solution absorbante. Cependant, une solution absorbante facilement vaporisable est pénalisée par les pertes en solution absorbante par entraînement lors du contact entre la charge gazeuse à traiter et la solution absorbante. La part de la chaleur sensible est essentiellement liée à la capacité d'absorption de la solution absorbante : elle est en effet proportionnelle au débit de solution absorbante à régénérer. La répartition du coût énergétique de l'étape de régénération entre la chaleur sensible, la chaleur de vaporisation et l'enthalpie de liaison gaz absorbé-solution absorbante dépend essentiellement des propriétés physico-chimiques de la solution absorbante et du composé absorbé.

La présente invention a pour but de proposer un procédé de désacidification d'un gaz. L'invention propose de diminuer la quantité d'énergie nécessaire pour régénérer une solution absorbante chargée en composés acides.

La présente invention propose d'utiliser une solution absorbante qui a la propriété de former deux phases séparables lorsqu'elle a absorbé une quantité déterminée de composés acides : une première phase riche en composés acides, une deuxième phase pauvre en composés acides. Cette propriété de séparation en ces deux phases permet de régénérer uniquement la phase chargée en composés acides.

De manière générale, la présente invention concerne un procédé de désacidification d'un effluent gazeux comportant au moins un composé acide du groupe constitué par l'hydrogène sulfuré (H2S), les mercaptans, le dioxyde de carbone (CO2), le dioxyde de soufre (SO2), l'oxysulfure de carbone (COS) et le di-sulfure de carbone (CS2), dans lequel on effectue les étapes suivantes :
a) on met en contact l'effluent gazeux avec une solution absorbante de manière à obtenir un effluent gazeux appauvri en composés acides et une solution absorbante chargée en composés acides, la solution absorbante étant choisie pour sa propriété de former deux phases séparables lorsqu'elle absorbe une quantité déterminée de composés acides : une première phase riche en composés acides, une deuxième phase pauvre en composés acides, ladite solution absorbante comportant un composé réactif qui réagit avec au moins un desdits composés acides choisi dans le groupe constitué parmi les amines, et un composé de solvatation qui est l'eau,
b) on sépare la solution absorbante chargée en composés acides en deux fractions : une première fraction de solution absorbante appauvrie en composés acides et une deuxième fraction de solution absorbante enrichie en composés acides,
c) on régénère uniquement deuxième fraction de manière à libérer une partie des composés acides,
d) on recycle la première fraction de solution absorbante obtenue à l'étape b) et la solution absorbante régénérée obtenue à l'étape c), en tant que solution absorbante à l'étape a).

Selon l'invention, la solution absorbante comporte un composé qui réagit avec au moins un desdits composés acides, le composé réactif étant choisi dans le groupe constitué par les amines.

De plus, la solution absorbante comporte un composé de solvatation qui est l'eau,

En outre, la solution absorbante peut comporter un sel choisi dans le groupe constitué par les sels d'alcalin, les sels d'alcalino-terreux, les sels de métaux et les sels d'amines.

Selon l'invention, à l'étape b), on peut utiliser l'une des techniques de séparation suivantes : décantation, centrifugation, filtration.

A l'étape c), on peut distiller la deuxième fraction de solution absorbante de manière à produire une solution absorbante régénérée appauvrie en composés acides en libérant des composés acides sous forme gazeuse.

Alternativement, à l'étape c), on peut détendre la deuxième fraction de manière à produire un liquide en libérant des composés acides sous forme gazeuse, puis on peut évacuer les composés acides libérés et on peut séparer le liquide en une première portion de solution absorbante régénérée qui est appauvrie en composés acides et une troisième fraction de solution absorbante. Dans ce cas, on peut détendre la troisième fraction de solution absorbante de manière à produire une deuxième portion de solution absorbante régénérée appauvrie en composés acides et des composés acides libérés sous forme gazeuse par détente. On peut également distiller la troisième fraction de solution absorbante de manière à produire une deuxième portion de solution absorbante régénérée appauvrie en composés acides en libérant des composés acides sous forme gazeuse.

Le procédé selon l'invention peut être appliqué au traitement d'un effluent gazeux choisi dans le groupe comportant le gaz naturel, le gaz de synthèse, les fumées de combustion, les gaz de raffinerie, les gaz obtenus en queue du procédé Claus, les gaz de fermentation de biomasse.

Dans le cas de l'application du procédé selon l'invention à l'absorption du dioxyde de carbone des fumées de combustion ou du gaz naturel, au traitement des gaz de queue de Claus, ou à la désulfuration du gaz naturel et des gaz de raffinerie, on peut employer une solution absorbante comportant l'un des couples composés réactifs/composés de solvatation suivants : N,N,N',N',N"-pentaméthyldiéthylènetriamine/eau, N,N,N',N',N"-pentaméthyldipropylènetriamine/eau, N,N-Bis(2,2-diéthoxyéthyl)méthylamine/eau, N,N-diméthyldipropylènetriamine/tétraéthylènegylcoldiméthyléther et N,N-diméthyldipropylènetriamine/eau.

Le procédé selon la présente invention présente l'avantage de ne régénérer qu'une fraction de la solution absorbante, et ainsi de limiter la quantité d'énergie nécessaire à la régénération de la solution absorbante.

D'autres caractéristiques et avantages de l'invention seront mieux compris et apparaîtront clairement à la lecture de la description faite ci-après en se référant aux dessins parmi lesquels :
- la figure 1 schématise un procédé de désacidification avec régénération fractionnée de la solution absorbante,
- les figures 2 et 3 représentent deux modes de réalisation de l'absorption des composés acides et de la séparation de la solution absorbante en deux phases,
- la figure 4 représente un mode de réalisation de la régénération du solvant,
- la figure 5 représente un autre mode de réalisation du procédé de désacidification.

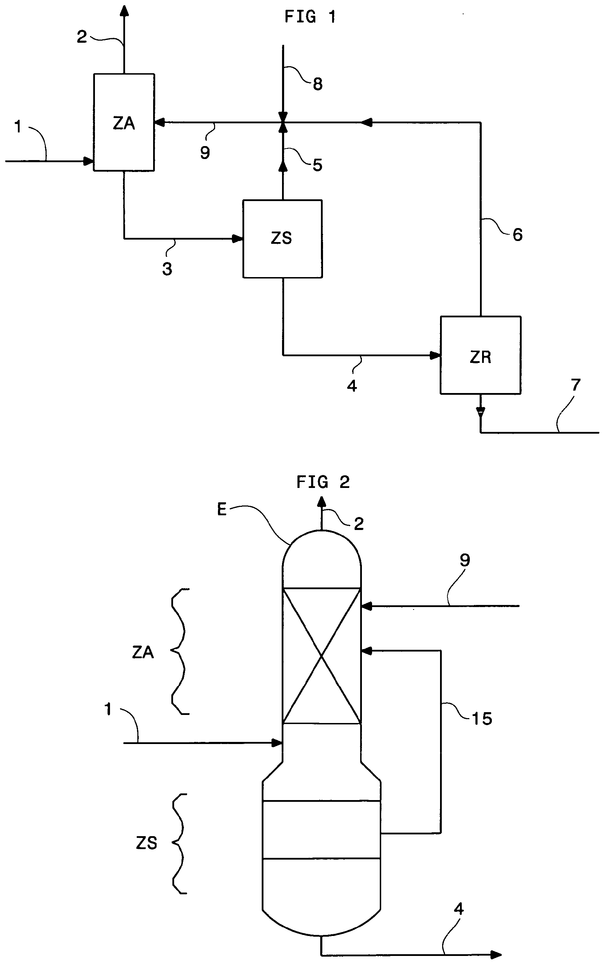

Sur la figure 1, l'effluent gazeux à désacidifier arrive par le conduit 1. Le procédé de désacidification schématisé par la figure 1 peut être appliqué au traitement de différents effluents gazeux. Par exemple, le procédé permet de décarbonater des fumées de combustion, de désacidifier du gaz naturel ou un gaz obtenu en queue du procédé Claus. Le procédé permet également de retirer les composés acides contenus dans les gaz de synthèse, dans les gaz de conversion dans les centrales intégrées de combustion du charbon ou du gaz naturel, et dans les gaz issus de la fermentation de biomasse.

Dans le cadre de la décarbonatation des fumées de combustion, la composition typique d'un effluent gazeux correspond, en volume à 75 % d'azote, 15 % de dioxyde de carbone, 5 % d'oxygène et 5 % d'eau. Différentes impuretés telles que des SOₓ, NOₓ, Ar et autres particules sont aussi présentes en quantités moindres, elles représentent en général moins de 2 % volume. La température de ces fumées est comprise entre 50°C et 180°C, la pression est quant à elle généralement inférieure à 15 bars.

Le gaz naturel, quant à lui, est essentiellement constitué de 25 % à 99 % vol. d'hydrocarbures, essentiellement du méthane, accompagné d'hydrocarbures possédant généralement entre 2 et 6 atomes de carbone. La présence de dioxyde de carbone, dans des proportions comprises entre 1 % et 75 % vol. de CO₂ est souvent observée. D'autres impuretés, essentiellement des composés soufrés tels que les mercaptans, le COS et l'H₂S peuvent être présentes dans des concentrations allant de quelques ppm jusqu'à 50 % vol. Le gaz naturel est généralement disponible à des pressions comprises entre 20 et 100 bars et des températures comprises entre 20°C et 60°C. Les conditions de transport, température et pression, définissent la teneur en eau de cet effluent gazeux.

Concernant les gaz de queue de Claus, leur traitement final implique souvent des étapes d'hydrogénation et d'hydrolyse pour transformer l'ensemble des espèces soufrées en hydrogène sulfuré, à son tour capté par un procédé de désacidification mettant en oeuvre un solvant à base d'alcanolamine. L'exemple type de ce procédé est le procédé SCOT. Les gaz à traiter lors de la phase d'absorption sont alors disponibles dans ce cas à des pressions souvent voisines de la pression atmosphérique, et des températures avoisinant 50°C, classiquement comprises entre 38°C et 55°C. Ces gaz contiennent en moyenne moins de 5 % vol. d'H₂S, le plus souvent moins de 2 %, jusqu'à 50 % de dioxyde de carbone, le reste du gaz étant essentiellement composé d'azote. Ces gaz peuvent être saturés en eau, par exemple ils peuvent contenir environ 5 % en volume d'eau.

Les autres effluents gazeux nécessitant d'être désacidifiés pour des raisons de sécurité, de transport ou en fonction de leur utilisation, tels que les gaz de synthèse, les gaz de conversion dans les centrales intégrées de combustion du charbon ou du gaz naturel, les gaz issus de la fermentation de biomasse présentent quant à eux des conditions de disponibilité très variables selon leur origine, notamment en ce qui concerne la température, la pression, la composition du gaz et ses concentrations en gaz acides.

De manière générale, les composés acides à retirer de l'effluent gazeux arrivant par le conduit 1 sont des acides de Brönsted tels que l'hydrogène sulfuré (H₂S) ou les mercaptans, notamment le méthylmercaptan et l'éthylmercaptan, et des acides de Lewis tels que le dioxyde de carbone (CO₂), le dioxyde de soufre (SO₂), ou l'oxysulfure de carbone (COS) et le di-sulfure de carbone (CS₂). Ces composés acides sont généralement rencontrés dans des proportions comprises entre quelques ppm et plusieurs pourcents, par exemple jusqu'à 75% pour le CO₂ et l'H₂S dans le gaz naturel.

L'effluent gazeux arrivant par le conduit 1 peut être disponible à des pressions comprises entre la pression atmosphérique pour les fumées de postcombustion et 150 bars, de préférence 100 bars pour le gaz naturel. Dans le cas des effluents gazeux à basse pression, une phase de compression peut être envisagée afin de se positionner dans des domaines de pression favorables à la mise en oeuvre de la présente invention. La température de cet effluent est généralement comprise entre 0°C et 300 °C, de préférence entre 20°C et 180°C en considérant aussi bien un gaz naturel qu'une fumée de combustion. Elle peut cependant être contrôlée (par chauffage ou refroidissement) afin de favoriser la capture des composés acides par la solution absorbante.

L'effluent gazeux arrivant par le conduit 1 est mis en contact dans la zone d'absorption ZA avec la solution absorbante liquide arrivant par le conduit 9. Les techniques classiques de mise en contact d'un gaz et d'un liquide pourront être mises en oeuvre : colonne à bulles, colonne à plateaux, colonne à garnissage, vrac ou structuré, réacteurs agités en série, contacteurs membranaires...

La solution absorbante est choisie pour ses aptitudes à absorber les composés acides dans la zone ZA. L'effluent gazeux appauvri en composés acides est évacué de la zone ZA par le conduit 2. La solution absorbante chargée en composés acides est évacuée de la zone ZA par le conduit 3.

En outre, selon l'invention, la solution absorbante est choisie pour sa propriété de former au moins deux phases séparables lorsqu'elle a absorbé une quantité déterminée de composés acides, dans des conditions thermodynamiques déterminées. La solution chargée en composés acides forme une première phase comportant les molécules de la solution absorbante qui n'ont pas réagi avec les composés acides et une deuxième phase comportant les molécules de la solution qui ont réagi avec les composés acides.

La technique de mise en contact dans la zone ZA est adaptée à la nature et aux propriétés de la formation des deux phases.

La solution absorbante peut être formée d'un ou plusieurs composés réactifs ou présentant une affinité physico-chimique avec les composés acides et éventuellement un ou plusieurs composés de solvatation. De préférence, on choisit une solution absorbante qui comporte des composés réactifs avec les composés acides. Le ou les composés éventuellement utilisés pour la solvatation du ou des composés réactifs peuvent porter des fonctions réactives avec les composés acides à traiter.

Les composés réactifs peuvent être tout composé dont la réaction avec un ou plusieurs composés acides, par exemple l'H₂S, ou le CO₂, ou le SO₂, ou les mercaptans, ou le COS ou le CS₂, entraîne la formation d'une deuxième phase, par exemple liquide ou solide. Ainsi, l'absorption d'un ou plusieurs composés acides par la solution absorbante conduit à la formation d'un équilibre entre deux phases liquides ou entre une phase liquide et une phase solide. De préférence, on choisit la solution absorbante de manière à ce qu'elle forme deux phases liquides lorsqu'elle a absorbé une quantité déterminée de composés acides.

La nature des composés réactifs peut être choisie en fonction de la nature du ou des composés acides à traiter pour permettre une réaction chimique réversible avec le ou les composés acides à traiter. La structure chimique des composés réactifs peut aussi être choisie de manière à obtenir par ailleurs une stabilité accrue de la solution absorbante dans les conditions d'utilisation.

Les composés réactifs peuvent être par exemple et de façon non limitative des amines (primaires, secondaires, tertiaires, cycliques ou non, aromatiques ou non, saturés ou non), des alcanolamines, des polyamines, des acides aminés, des sels alcalins d'acides aminés, des amides, des urées, des phosphates, des carbonates ou des borates de métaux alcalins.

Les composés réactifs comportant une fonction amine ont de préférence la structure suivante :

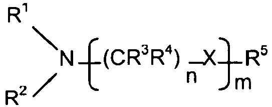

X représente une fonction amine (N-R⁶) ou un atome d'oxygène (O) ou un atome de soufre (S) ou un disulfure (S-S) ou une fonction carbonyl (C=O) ou une fonction carboxyl (O=C-O) ou une fonction amide (O=C-N-R⁶) ou un phényl.

n et m sont des nombres entiers. n peut prendre toutes les valeurs de 0 à 6, de préférence de 0 à 4, et m toutes les valeurs de 1 à 7, de préférence de 1 à 5.

R⁵ représente soit un atome d'hydrogène soit une chaîne hydrocarbonée, ramifiée ou non, saturée ou non, comportant de 1 à 10 atomes de carbone, de préférence de 1 à 8 atomes de carbone.

R¹, R², R³, R⁴ et R⁶ représentent soit un atome d'hydrogène, soit une chaîne hydrocarbonée, ramifiée ou non, saturée ou non, comportant de 1 à 10 atomes de carbone, de préférence de 1 à 8 atomes de carbone, soit ont la structure suivante :

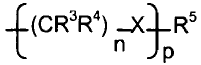

n et p sont des nombres entiers, n peut prendre toutes les valeurs de 0 à 6, de préférence de 0 à 4, et p toutes les valeurs de 0 à 7, de préférence de 0 à 5. R³ et R⁴ ont les mêmes définitions que précédemment, ils peuvent être identiques ou de nature différente.

R¹, R², R³, R⁴, R⁵ et R⁶ sont définis de manière à éventuellement constituer des cycles ou des hétérocycles, saturés ou non, aromatiques ou non, en les associant deux par deux.

A titre d'exemple et de façon non limitative, les composés réactifs comportant une fonction amine peuvent être choisis dans la liste suivante : la monoéthanolamine, la diéthanolamine, la triéthanolamine, le 2-(2-aminoéthoxy)éthanol, le N,N-diméthylaminoéthoxyéthanol, le N,N,N'-triméthyl-N'-hydroxyéthyl-bisaminoéthyléther, la N,N-bis-(3-diméthylaminopropyl)-N-isopropanolamine, la N-(3-diméthylaminopropyl)-N,N-diisopropanolamine, la N,N-diméthyléthanolamine, la N-méthyléthanolamine, la N-méthyldiéthanolamine, la diisopropanolamine, la morpholine, la N-méthylmorpholine, la N-éthylmorpholine, la N,N-diméthyl-1,3-propanediamine, la N,N,N-tris(3-diméthylaminopropyl)amine, la N,N,N',N'-tétraméthyliminobispropylamine, la N-(3-aminopropyl)morpholine, la N-(2-diméthylaminoéthyl)morpholine, la 3-méthoxypropylamine, la N-(2-aminoéthyl)pipérazine, le bis-(2-diméthylaminoéthyl)éther, le 2,2-dimorpholinodiéthyléther, la N,N'-diméthylpipérazine, la N,N,N',N',N"-pentaméthyldiéthylènetriamine, la N,N,N',N',N"-pentaméthyldipropylènetriamine, la N,N-Bis(2,2-diéthoxyéthyl)méthylamine, la 3-butyl-2-(1-éthylpentyl)oxazolidine, la 3-éthyl-2-méthyl-2-(3-méthylbutyl)oxazolidine, la 1,2,2,6,6-pentaméthyl-4-pipéridone, la 1-(2-méthylpropyl)-4-piperidone, la N,N,N',N'-tétraéthyléthylènediamine, la N,N,N',N'-tétraéthyliminobiséthylamine, la 1,1,4,7,10,10-hexaméthyltriéthylènetétramine, la 1-phénylpipérazine, la 1-formylpipérazine, le 1-pipérazinecarboxylate d'éthyl, la N,N'-di-tert-butyléthylènediamine, la 4-éthyl-2-méthyl-2-(3-méthylbutyl)oxazolidine, la tétraéthylènepentamine, la triéthylènetétramine, la N,N-diéthyldiéthylènetriamine, la N1-isopropyldiéthylènetriamine, la N,N-diméthyldipropylènetriamine, la diéthylènetriamine, la N-(2-aminoéthyl)-1,3-propanediamine, la 2,2'-(éthylènedioxy)diéthylamine, la N-(2-aminoéthyl)morpholine, la 4-amino-2,2,6,6-tétraméthylpipéridine, le 1,2-diaminocyclohexane, la 2-pipéridinoéthylamine, la 2-(2-aminoéthyl)-1-méthylpyrrolidine, l'éthylènediamine, la N,N-diéthyléthylènediamine, la N-phényléthylènediamine, la 4,9-dioxa-1,12-dodécanediamine, la 4,7,10-trioxa-1,13-tridécanediamine, la 1,2,4-triméthylpipérazine, la N,N'-diéthyl-N,N'-diméthyléthylènediamine, la N,N-diéthyl-N',N'-diméthyléthylènediamine, la 1,4,7-triméthyl-1,4,7-triazacyclononane, la 1,4-diméthyl-1,4-diazacycloheptane, la N-(2-diméthylaminoéthyl)-N'-méthylpipérazine, la N,N,N',N'-tétraéthylpropylènediamine, la 1-[2-(1-pipéridinyl)éthyl)]pipéridine, la 4,4'-éthylènedimorpholine, la N,N,N',N'-tétraéthyl-N"-méthyl-dipropylènetriamine, la 4-(diméthylamino)-1,2,2,6,6-pentaméthylpipéridine, le 1,5,9-triméthyl-1,5,9-triazacyclododécane, le 1,4,8,11-tétraméthyl-1,4,8,11-tétraazacyclotétradécane, la N,N'-difurfuryléthylènediamine, le 1,2-Bis(2-aminoéthyl)thioéthane, le Bis(2-aminoéthyl)disulfure, le Bis(2-diméthylaminoéthyl)sulfure, le 1-acéthyl-2-diéthylaminoéthane, le 1-amino-2-benzylaminoethane, le 1-acéthyl-3-diméthylaminopropane, le 1-diméthylamino-3,3-diphénylpropane, la N,N-diméthylbenzylamine, le 2-(diméthylaminométhyl)thiophène, la N,N,5-triméthylfurfurylamine, la N,N-Bis(tétrahydro-2-furanylméthyl)amine, la 2-(éthylsulfanyl)éthanamine, la thiomorpholine, le 2-[(2-aminoéthyl)sulfanyl]éthanol, le 3-thiomorpholinylméthanol, le 2-(butylamino)éthanethiol, le Bis(2-diéthylaminoéthyl)éther, le 1-diméthylamino-2-éthylméthylaminoéthoxyéthane, le 1,2,3-triaminopropane et le N-1--(2-aminopropyl)-1,2-propanediamine.

Les composés de solvatation peuvent être tous les composés qui dissolvent en quantité suffisante les composés réactifs ou qui sont miscibles avec les composés réactifs décrits ci-dessus et qui provoquent la formation de deux phases, par exemple liquide-liquide ou liquide-solide, lorsqu'ils sont associés avec au moins un des composés réactifs ayant réagi avec un ou plusieurs composés acides, par exemple l'H₂S, ou le CO₂, ou le SO₂, ou les mercaptans, ou le COS ou le CS2.

Les composés de solvatation peuvent être de préférence de l'eau, des glycols, des polyéthylèneglycols, des polypropylèneglycols, des copolymères éthylèneglycol-propylèneglycol, des éthers de glycols, des alcools, des urées, des lactames, des pyrrolidones N-alkylées, des pipéridones N-alkylées, des cyclotétraméthylènesulfones, des N-alkylformamides, des N-alkylacétamides, des éther-cétones ou des phosphates d'alkyls et leurs dérivés. A titre d'exemple et de façon non limitative, il peut s'agir d'eau, de tétraéthylèneglycoldiméthyléther, de sulfolane, de N-méthylpyrrolidone, de carbonate de propylène, de diméthylpropylèneurée, de N-méthylcaprolactame, de diméthylformamide, de diméthylacétamide, de formamide, d'acétamide, de 2-méthoxy-2-méthyl-3-butanone, de 2-méthoxy-2-méthyl-4-pentanone, ou de tributylphosphate.

Les composés réactifs peuvent représenter de 10 à 100 % poids du solvant, préférentiellement de 25 à 90% poids, et idéalement de 40 à 80% poids.

La solution absorbante peut éventuellement contenir, en outre, un ou plusieurs activateurs pour favoriser l'absorption des composés à traiter. Il s'agit par exemple d'amines, d'acides aminés, de sels alcalins d'acides aminés, de phosphates, de carbonates ou de borates de métaux alcalins.

Les activateurs comportant une fonction amine peuvent avoir de préférence la structure suivante :

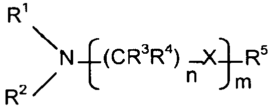

X représente une fonction amine (N-R⁶) ou un atome d'oxygène (O) ou un atome de soufre (S) ou un disulfure (S-S) ou une fonction carbonyl (C=O) ou une fonction carboxyl (O=C-O) ou une fonction amide (O=C-N-R⁶) ou un phényl.

n et m sont des nombres entiers. n peut prendre toutes les valeurs de 0 à 8, de préférence de 0 à 6, et m toutes les valeurs de 1 à 7, de préférence de 1 à 5.

R⁵ représente soit un atome d'hydrogène soit une chaîne hydrocarbonée, ramifiée ou non, saturée ou non, comportant de 1 à 10 atomes de carbone, de préférence de 1 à 8 atomes de carbone.

R¹, R², R³, R⁴ et R⁶ représentent soit un atome d'hydrogène soit une chaîne hydrocarbonée, ramifiée ou non, saturée ou non, comportant de 1 à 10 atomes de carbone, de préférence de 1 à 8 atomes de carbone, soit ont la structure suivante :

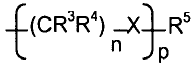

n et p sont des nombres entiers, n peut prendre toutes les valeurs entre 0 et 8, de préférence entre 0 et 6, et p toutes les valeurs entre 0 et 7, de préférence entre 0 et 5. R³ et R⁴ ont les mêmes définitions que précédemment, ils peuvent être identiques ou de nature différente.

R¹, R², R³, R⁴, R⁵ et R⁶ sont définis de manière à éventuellement constituer des cycles ou des hétérocycles, saturés ou non, aromatiques ou non, en les associant deux par deux.

R¹, R² et R⁶ sont définis de telle manière qu'au moins l'un d'eux représente un atome d'hydrogène.

La concentration en activateur est comprise entre 0 et 30% poids, de préférence entre 0 et 15% poids de la solution absorbante.

Par exemple, les activateurs peuvent être choisis dans la liste suivante : la monoéthanolamine, la diéthanolamine, le 2-(2-aminoéthoxy)éthanol (diglycolamine), la N-méthyléthanolamine, la N-éthyléthanolamine, la N-propyléthanolamine, la N-butyléthanolamine, la N-(2-aminoéthyl)éthanolamine, la diisopropanolamine, le 3-amino-1-propanol, la morpholine, la N,N-diméthyl-1,3-propanediamine, la N,N,N',N'-tétraméthyliminobispropylamine, la N-(3-aminopropyl)morpholine, la 3-méthoxypropylamine, la 3-éthoxypropylamine, la N-(2-aminoéthyl)pipérazine, la N-(3-aminopropyl)pipérazine, la N,N,N',N'-tétraéthyliminobiséthylamine, la 1-phénylpipérazine, la 1-formylpipérazine, le 1-pipérazinecarboxylate d'éthyl, la N,N'-di-tert-butyléthylènediamine, la 4-éthyl-2-méthyl-2-(3-méthylbutyl)oxazolidine, la tétraéthylènepentamine, la triéthylènetétramine, la N,N-diéthyldiéthylènetriamine, la N-1--isopropyldiéthylènetriamine, la N,N-diméthyldipropylènetriamine, la dipropylènetriamine, la diéthylènetriamine, la N-(2-aminoéthyl)-1,3-propanediamine, la 2,2'-(éthylènedioxy)diéthylamine, la N-(2-aminoéthyl)morpholine, la 4-amino-2,2,6,6-tétraméthylpipéridine, la N-(2-aminoéthyl)pipéridine, la N-(3-aminopropyl)pipéridine, le 1,2-diaminocyclohexane, la N-cyclohexyl-1,3-propanediamine, la 2-pipéridinoéthylamine, la 2-(2-aminoéthyl)-1-méthylpyrrolidine, l'éthylènediamine, la N,N-diéthyléthylènediamine, la N-phényléthylènediamine, la 4,9-dioxa-1,12-dodécanediamine, la 4,7,10-trioxa-1,13-tridécanediamine, la furfurylamine, la N,N'-difurfuryléthylènediamine, le 1,2-Bis(2-aminoéthyl)thioéthane, le Bis(2-aminoéthyl)disulfure, le Bis(aminoéthyl)sulfure, le 1-amino-2-benzylaminoethane, le 2-(aminométhyl)thiophène, la N,N-Bis(tétrahydro-2-furanylméthyl)amine, la 2-(éthylsulfanyl)éthanamine, la thiomorpholine, le 2-[(2-aminoéthyl)sulfanyl]éthanol, le 2-(butylamino)éthanethiol, le 1,2,3-triaminopropane, le 1,3-diaminopropane, le 1,4-diaminobutane, le 1,5-diaminopentane, l'hexaméthylènediamine, la 1,2-propanediamine, la 2-méthyl-1,2-propanediamine, la 2-méthylpipérazine, la N∼2∼,N∼-2∼-diméthyl-1,2-propanediamine, la N∼1∼,N∼1∼-diméthyl-1,2-propanediamine, la 2,6-diméthylpipérazine, la 1-éthyl-3-pipéridinamine, la N∼1∼-(2-aminopropyl)-1,2-propanediamine, la décahydroquinoxaline, la 2,3,5,6-tétraméthylpipérazine, la N,N-diméthyl(2-pipéridinyl)méthanamine, la 1-(2-pipéridinylméthyl)pipéridine, la 2,2-diméthyl-1,3-propanediamine, la N--1-,N-3--,2-triméthyl-1,3-propanediamine, la 2-(aminométhyl)-2-méthyl-1,3-propanediamine, la N∼1∼,N∼1∼,2,2-tétraméthyl-1,3-propanediamine, la 1-méthoxy-2-propanamine, la tétrahydro-2-furanylméthylamine, la 2,6-diméthylmorpholine, la N-méthyl(tétrahydro-2-furanyl)méthanamine.

La solution absorbante peut comporter, en outre, un ou plusieurs sels dans le but d'abaisser la pression partielle de gaz acides à laquelle se forme une deuxième phase par réaction des gaz acides avec le ou les composés réactifs. Ces sels peuvent être par exemple et de façon non limitative des sels d'alcalin, d'alcalino-terreux, de métaux ou d'amines. L'anion associé peut être par exemple et de façon non limitative un halogénure, un phosphate, un sulfate, un nitrate, un nitrite, un phosphite ou la base conjuguée d'un acide carboxylique. La ou les amines utilisées pour faire ces sels peuvent être l'une ou plusieurs des amines qui sont présentes dans la solution absorbante en tant que composés réactifs avec les composés acides, ou en tant qu'activateur, et qui sont partiellement neutralisées par un ou plusieurs acides plus forts que les acides présents dans l'effluent gazeux traité. Les acides utilisés peuvent être par exemple et de façon non limitative de l'acide phosphorique, de l'acide phosphoreux, de l'acide nitreux, de l'acide oxalique, de l'acide acétique, de l'acide formique, de l'acide propanoique, de l'acide butanoique, de l'acide nitrique, de l'acide sulfurique, ou de l'acide chlorhydrique. D'autres types d'amines totalement neutralisées par de tels acides peuvent aussi être ajoutées à la solution absorbante. Ces sels peuvent aussi résulter de la dégradation partielle de la solution absorbante, par exemple suite à la réaction des composés réactifs avec une impureté dans le gaz traité. Les sels peuvent également être obtenus suite à l'introduction de soude ou de potasse pour neutraliser des acides formés dans l'unité de mise en oeuvre du procédé. Par ailleurs, l'ajout de sels peut éventuellement être évité dans les cas où les activateurs, les composés réactifs ou tout autre additif sont par nature des sels. La concentration en sels peut être adaptée en fonction de la pression partielle et de la nature du ou des composés acides présents dans la charge gazeuse à traiter, ainsi qu'aux conditions de mise en oeuvre.

La solution absorbante peut contenir en outre des additifs anticorrosion et/ou antimousse. Leur nature et leur concentration sont choisies en fonction de la nature du solvant d'absorption utilisé, de la charge à traiter ainsi que des conditions de mise en oeuvre. Leur concentration dans la solution absorbante varie typiquement entre 0,01 % et 5 % en poids. Ces agents peuvent être des oxydes de vanadium (par exemple V₂O₃) ou des chromates (par exemple K₂Cr₂O₇).

La composition de la solution absorbante est déterminée notamment en fonction de la nature de l'effluent gazeux à traiter et des conditions de mise en oeuvre du procédé de désacidification.

Pour l'application du procédé selon l'invention à la décarbonatation des fumées de combustion, à la décarbonatation du gaz naturel, au traitement des gaz de queue de Claus ou à la désulfuration du gaz naturel et des gaz de raffinerie, de préférence, on emploie une solution absorbante comportant l'un des couples composés réactifs/composés de solvatation suivants: N,N,N',N',N"-pentaméthyldiéthylènetriamine/eau ou N,N,N',N',N"-pentaméthyldipropylènetriamine/eau ou N,N-Bis(2,2-diéthoxyéthyl)méthylamine/eau ou N,N-diméthyldipropylènetriamine/tétraéthylènegylcoldiméthyléther ou N,N-diméthyldipropylènetriamine/eau.

La solution absorbante, une fois chargée en composés acides comporte deux phases, est introduite par le conduit 3 dans la zone de séparation ZS. Les deux phases sont séparées dans la zone ZS. La séparation peut être effectuée par décantation, c'est-à-dire par différence de densité des phases sous l'effet de la gravité. Le temps de séjour dans la zone ZS peut être adapté en fonction de la vitesse de décantation des deux phases. Les techniques de séparation de phase par centrifugation ou par filtration peuvent également être mises en oeuvre.

La séparation permet d'obtenir une première fraction riche en molécules n'ayant pas réagi avec les composés acides. Cette première fraction de solution absorbante est appauvrie en composés acides par rapport à la solution absorbante arrivant par le conduit 3. D'autre part, la séparation permet d'obtenir une deuxième fraction riche en molécules ayant réagi avec les composés acides. Cette deuxième fraction de la solution absorbante est enrichie en composés acides par rapport à la solution absorbante arrivant par le conduit 3.

La première fraction est évacuée de la zone ZS par le conduit 5, puis introduite dans la zone d'absorption ZA.

La deuxième fraction est évacuée de la zone ZS par le conduit 4 pour être introduite dans la zone de régénération ZR. Dans la zone ZR, les composés acides sont séparés de la solution absorbante.

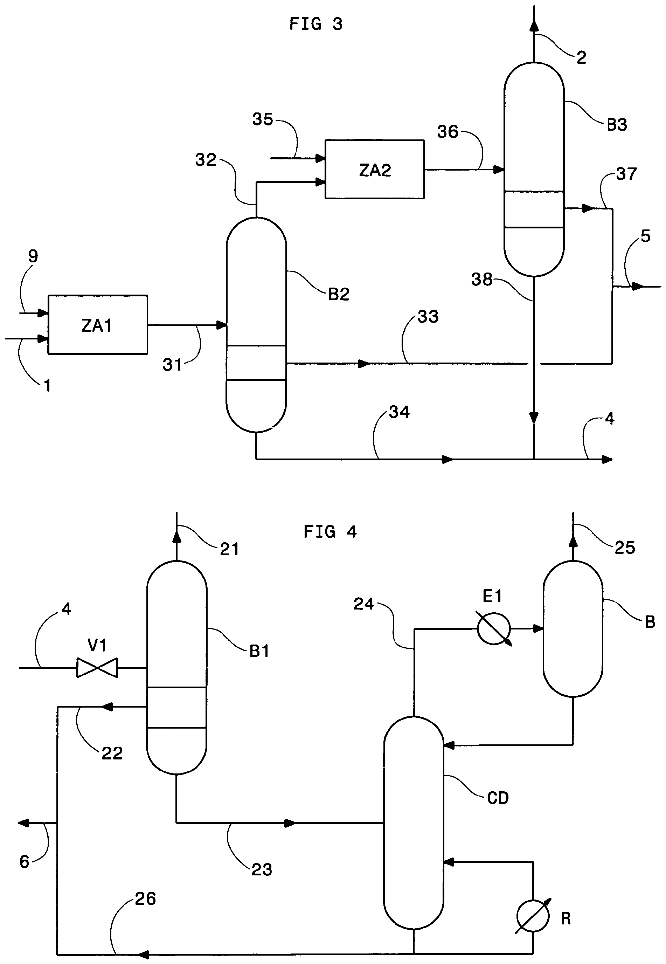

La zone ZR peut mettre en oeuvre une régénération par détente et/ou une régénération thermique, c'est-à-dire par élévation de température. Les techniques de régénération sont notamment décrites ultérieurement en référence à la figure 4.

Les composés acides sont évacués de la zone ZR par le conduit 7. La fraction de solution absorbante régénérée, c'est-à-dire appauvrie en composés acides, est évacuée par le conduit 6 puis introduite dans la zone ZA.

La solution absorbante circulant dans le conduit 6 et la première fraction circulant dans le conduit 5 peuvent être mélangées puis introduites par le conduit 9 dans la zone d'absorption ZA. Alternativement, les deux flux circulant dans les conduits 5 et 6 peuvent également être introduits séparément à deux endroits différents dans la zone ZA.

De plus, un appoint en solution absorbante peut arriver par le conduit 8 pour être introduit dans la zone ZA par le conduit 9. Cet appoint permet notamment de remplacer la quantité de solution absorbante éventuellement perdue dans la zone ZR.

La zone d'absorption ZA et la zone de séparation ZS peuvent être regroupées dans une même enceinte E représentée par la figure 2. Les références de la figure 2 identiques aux références de la figure 1 désignent les mêmes éléments.

L'enceinte E comporte une zone d'absorption ZA dans sa partie supérieure et une zone de séparation ZS dans sa partie inférieure, ou autrement dit une botte de décantation ZS positionnée au fond de l'enceinte E. La mise en oeuvre de la botte de décantation permet de regrouper la zone ZA et la zone ZS dans une même enceinte, dans la mesure où le phénomène de décantation est suffisamment rapide par rapport aux débits de fluide, c'est-à-dire de l'effluent gazeux et de la solution absorbante, entrant dans la zone ZA. L'effluent gazeux est introduit dans l'enceinte E par le conduit 1 de manière à entrer en contact dans la zone ZA avec la solution absorbante arrivant par les conduits 9 et 15. L'effluent gazeux appauvri en composés acides est évacué en tête de l'enceinte E par le conduit 2. La solution absorbante chargée en composés acides s'écoule de la zone ZA dans la botte de décantation ZS par gravité. Dans la botte de décantation ZS, une première fraction riche en composés n'ayant pas réagi avec les composés acides se sépare d'une deuxième fraction riche en composés ayant réagi avec les composés acides.

Sur la figure 2, la phase chargée en composés acides décante dans le fond de la botte. Il peut exister des cas où c'est la phase appauvrie en composés acides qui décante au fond de la botte. Les descriptions en référence aux figures 3, 4 et 5 considèrent que la phase chargée en composés acides décante dans le fond du dispositif de séparation des phases.

Le conduit 15 permet de soutirer, de la zone ZS, une première fraction pauvre en composés acides, puis d'introduire cette première fraction dans la zone ZA de l'enceinte E.

Une deuxième fraction riche en composés acides est évacuée de l'enceinte E par le conduit 4.

La zone d'absorption ZA et la zone de séparation ZS peuvent être agencées selon le schéma représenté par la figure 3. Les références de la figure 3 identiques aux références de la figure 1 désignent les mêmes éléments.

Sur la figure 3, l'effluent gazeux arrivant par le conduit 1 est mis en contact dans le mélangeur ZA1 avec la solution absorbante arrivant par le conduit 9. Selon la représentation de la figure 3, le gaz à traiter et la solution absorbante circulent à co-courant. Le mélange de fluides évacué de ZA1 est introduit par le conduit 31 dans un séparateur B2, par exemple un ballon séparateur. L'effluent gazeux appauvri en composés acides est évacué en tête du ballon B2 par le conduit 32. La solution absorbante liquide décante dans le fond du ballon B2. Une fraction de la solution absorbante riche en molécules n'ayant pas réagi avec les composés acides est évacuée par le conduit 33. Une fraction de la solution absorbante riche en molécules ayant réagi avec les composés acides est évacuée du ballon B2 par le conduit 34.

L'effluent gazeux appauvri en composés acides circulant dans le conduit 32 est mis en contact dans le mélangeur ZA2 avec la solution absorbante arrivant par le conduit 35 (cette solution absorbante arrivant par le conduit 35 peut être une fraction de la solution absorbante arrivant par le conduit 9). Le mélange de fluides évacué de ZA2 est introduit par le conduit 36 dans le ballon séparateur B3. L'effluent gazeux appauvri en composés acides est évacué en tête du ballon B3 par le conduit 2. La solution absorbante liquide décante dans le fond du ballon B3. Une fraction de la solution absorbante riche en molécules n'ayant pas réagi avec les composés acides est évacuée par le conduit 37. Une fraction de la solution absorbante riche en molécules ayant réagi avec les composés acides est évacuée par le conduit 38.

Les flux de solution absorbante circulant dans les conduits 33 et 37 peuvent être réunis, puis envoyés par le conduit 5 dans la zone ZA1 et/ou ZA2.

Les flux de solution absorbante chargée en composés acides circulant dans les conduits 34 et 38 peuvent être réunis, puis envoyés par le conduit 4 vers une zone de régénération.

Les mélangeurs ZA1 et ZA2 peuvent être des dispositifs du type mélangeur statique ou dynamique, réacteur agité... On peut également mettre en oeuvre des dispositifs mélangeur décanteur qui regroupent le mélangeur ZA1, respectivement ZA2, et le décanteur B1, respectivement B2.

Selon le procédé de la figure 3, le gaz à traiter est introduit successivement dans deux dispositifs mélangeur décanteur. Sans sortir du cadre de l'invention, le gaz peut être introduit dans plus de deux dispositifs mélangeur décanteur.

Le schéma de la figure 4 représente, en détaillé, la zone de régénération ZR. Les références de la figure 4 identiques aux références de la figure 1 désignent les mêmes éléments.

La deuxième fraction de solution absorbante arrivant par le conduit 4 est riche en molécules ayant réagi avec les composés acides. Cette deuxième fraction doit être régénérée, c'est-à-dire débarrassée des composés acides qu'elle a absorbé.

La régénération peut être effectuée par détente et/ou par élévation de température. Le schéma de la figure 4 propose une régénération par détente et par élévation de température.

La deuxième fraction arrivant par le conduit 4 est détendue à travers le moyen de détente V1. Le moyen de détente peut comporter une vanne, une turbine, ou une combinaison d'une vanne et d'une turbine. La détente permet de régénérer partiellement la deuxième fraction. En effet, la baisse de pression permet de libérer sous forme gazeuse une partie des composés acides contenus dans la deuxième fraction, ainsi que les espèces gazeuses de la charge co-absorbées dans la zone de mise en contact ZA. Ces espèces co-absorbées sont principalement des hydrocarbures dans le cas du traitement d'un gaz naturel.

L'effluent obtenu après détente dans V1 comporte trois phases : une phase gazeuse comportant des composés acides libérés par la détente, une phase liquide de solution absorbante régénérée qui est appauvrie en composés acides et une phase liquide ou solide qui reste chargée en composés acides. Ces trois phases sont séparées dans le moyen de séparation B1, par exemple un ballon. Les composés acides libérés par la détente sont évacués par le conduit 21. Compte tenu des proportions des espèces co-absorbées et des gaz acides dans l'effluent gazeux résultant de la détente, ce dernier peut par exemple être retraité afin d'éliminer les gaz acides en vue d'une utilisation immédiate, soit en étant mélangé avec la charge arrivant par le conduit 1, soit en étant remélangé avec les gaz acides issus de l'étape de régénération par le conduit 7. La partie de la solution absorbante qui a été régénérée est évacuée par le conduit 22. La partie de la solution absorbante qui est chargée en composés acides est évacuée par le conduit 23 pour être introduite dans la colonne de distillation CD.

La régénération thermique dans la colonne CD est réalisée selon les techniques classiques : colonne de distillation à garnissage, vrac ou structuré, colonne à plateaux... Les conditions de mise en oeuvre de la distillation dans la colonne CD sont adaptées en fonction des propriétés physico-chimiques de la solution à régénérer. L'élévation de la température de la solution permet de libérer les composés acides sous forme gazeuse. Le fond de la colonne CD est muni d'un rebouilleur R. La fraction gazeuse évacuée en tête de la colonne CD par le conduit 24 est partiellement condensée dans l'échangeur de chaleur E1, puis introduite dans le ballon B. Les condensats récupérés en fond du ballon B sont introduits en tête de la colonne CD à titre de reflux. L'effluent riche en composés acides est évacué du ballon B par le conduit 25. La solution régénérée, c'est à dire issue de l'étape de régénération, est évacuée en fond de la colonne CD par le conduit 26.

Les flux de solution absorbante régénérée circulant dans les conduits 22 et 26 peuvent être mélangés, puis envoyés par le conduit 6 dans la zone ZA. Alternativement, ces deux flux de solution absorbante régénérée peuvent être envoyés séparément dans la zone ZA.

Sans sortir du cadre de l'invention, deux à trois niveaux de régénération par détente peuvent être positionnés avant l'étape de régénération thermique.

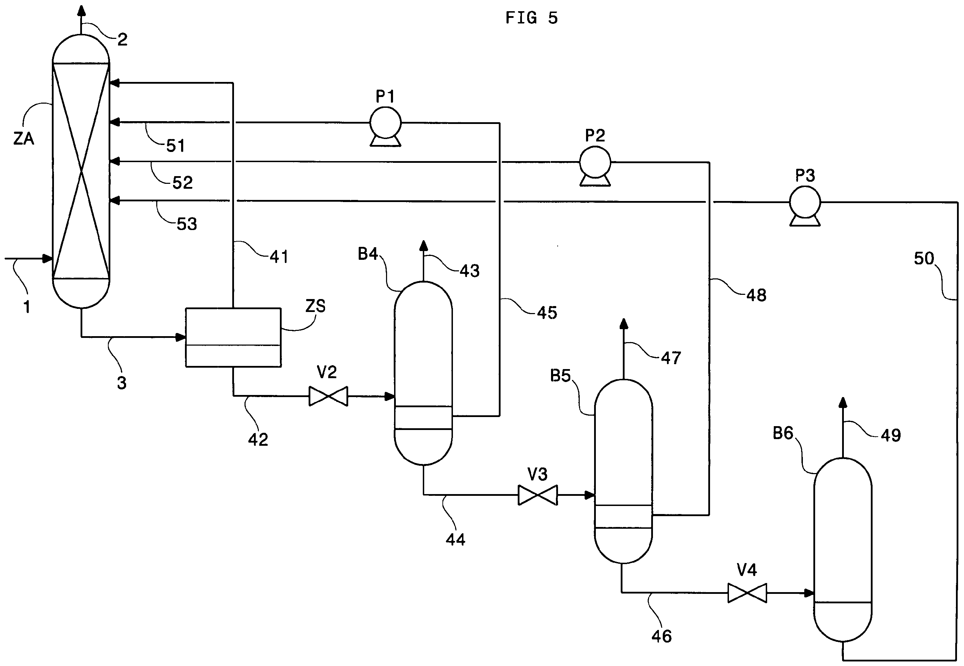

Dans le cas d'un effluent gazeux qui ne nécessite pas une désacidification poussée, la régénération peut consister en une succession de détentes telles que représentées par la figure 5. Les références de la figure 5 identiques aux références de la figure 1 désignent les mêmes éléments.

Sur la figure 5, l'effluent gazeux à désacidifier arrive par le conduit 1 et est introduit dans la colonne d'absorption ZA pour être mis en contact avec les solutions absorbantes arrivant par les conduits 41, 51, 52, et 53. L'effluent gazeux appauvri en composés acides est évacué de la zone ZA par le conduit 2. La solution absorbante chargée en composés acides est évacuée de la zone ZA par le conduit 3, puis introduite dans la zone ZS.

La solution absorbante chargée en composés acides est séparée en deux fractions dans la zone ZS : une fraction de solution absorbante pauvre en composés acides et une fraction de solution absorbante riche en composés acides.

La fraction de solution absorbante pauvre en composés acides est recyclée en étant introduite dans la colonne d'absorption ZA par le conduit 41.

La fraction de solution absorbante riche en composés acides est évacuée par le conduit 42, détendue à travers le moyen de détente (vanne, turbine ou combinaison d'une vanne et d'une turbine) V2 pour libérer une partie des composés acides. L'effluent issu du moyen de détente V2 est séparé dans le moyen de séparation B4, par exemple un ballon. Un gaz riche comportant les composés acides, et éventuellement des composés co-absorbés, libérés lors de la détente est évacué du ballon B4 par le conduit 43. En fonction des proportions de composés acides et de composés co-absorbés, le gaz évacué par le conduit 43 peut être traité avec les différents effluents acides, ou bien comprimés et renvoyés avec la charge arrivant par le conduit 1 dans la zone d'absorption ZA. Une fraction de la solution absorbante appauvrie en composés acides est évacuée du ballon B4 par le conduit 45. Une fraction de la solution absorbante riche en composés acides est évacuée du ballon B4 par le conduit 44.

La fraction de solution absorbante riche en composés acides évacuée par le conduit 44 est détendue à travers le moyen de détente V3 pour libérer une partie des composés acides. L'effluent issu du moyen de détente V3 est séparé dans le dispositif de séparation B5, par exemple un ballon. Un gaz riche comportant les composés acides libérés lors de la détente est évacué du ballon B5 par le conduit 47. Une fraction de la solution absorbante appauvrie en composés acides est évacuée du ballon B5 par le conduit 48. Une fraction de la solution absorbante riche en composés acides est évacuée du ballon B5 par le conduit 46.

La fraction de solution absorbante chargée en composés acides évacuée par le conduit 46 est détendue à travers le moyen de détente V4 pour libérer une partie des composés acides. L'effluent issu du moyen de détente est séparé dans le dispositif de séparation B6, par exemple un ballon. Un gaz riche comportant les composés acides libérés lors de la détente est évacué du ballon B6 par le conduit 49. La solution absorbante appauvrie en composés acides est évacuée du ballon B6 par le conduit 50.

Les flux de solution absorbante circulant dans les conduits 45, 48 et 50 sont respectivement pompés par les pompes P1, P2 et P3, puis introduits dans la zone ZA par les conduits 51, 52 et 53.

Sur la figure 5, les conduits 41, 51, 52 et 53 introduisent les fractions de solution absorbante à différents niveaux de la colonne d'absorption ZA. Alternativement, les conduits 41, 51, 52 et 53 peuvent être réunis en un seul conduit qui introduit les fractions de solution absorbante à un seul niveau de la colonne d'absorption ZA.

Les exemples numériques suivants permettent d'illustrer le procédé selon l'invention.

### Exemple 1:

Un solvant contenant 80 % poids de N,N,N',N',N"-pentaméthyldipropylènetriamine et 20 % poids d'eau est mis en contact à 40°C et à pression atmosphérique dans un contacteur gaz-liquide avec un mélange gazeux N₂-CO₂ contenant 30% volume de CO₂. L'absorption du dioxyde de carbone dans le solvant conduit à la démixtion du solvant en deux phases liquides. Le CO₂ absorbé se concentre dans la phase lourde avec 70% de l'eau initialement présente dans le solvant. Cette phase représente 28% du poids total de solvant.

L'addition d'acide phosphorique (2% molaire de l'amine) permet d'obtenir la démixtion avec un mélange gazeux N₂-CO₂ contenant 10% volume de CO₂.

La régénération par strippage à l'azote ou la régénération thermique par distillation, de l'ensemble ou d'une fraction du solvant diphasique, notamment la phase riche en CO₂ absorbé, permet de rendre au solvant sa capacité d'absorption vis à vis du CO₂.

### Exemple 2

Différentes injections d'H₂S sont effectuées sur 160,5 g de solvant eau-N,N,N',N',N"-pentaméthyldiéthylènetriamine, de composition 25-75 % poids, à une température de 40°C dans un réacteur fermé. Lorsque la pression partielle en H₂S dans le réacteur dépasse 0,3 bar, on observe la séparation de deux phases liquides. Un balayage à l'azote permet de stripper le sulfure d'hydrogène absorbé par le solvant qui redevient monophasique et retrouve ses capacités d'absorption.

### Exemple 3

Considérons le cas d'une fumée de postcombustion contenant 13 % vol de CO₂. La décarbonatation de cet effluent afin de capturer 90% du dioxyde de carbone est le plus souvent réalisée par un procédé mettant en oeuvre une solution aqueuse de MEA.

La fumée est traitée à 40°C par un solvant contenant 30% poids de MEA en solution aqueuse. L'alcanolamine est partiellement carbonatée : 18 % de la MEA n'est pas régénérée lors de l'étape de régénération appliquée à la totalité du solvant mis en oeuvre dans le procédé. Le coût énergétique ramené à la tonne de CO₂ produite est essentiellement lié au coût de régénération du solvant contenant jusqu'à 0,50 mole de CO₂ par mole d'amine lors de son introduction dans l'étape de régénération. Le coût de régénération est estimé à 4,3 GJ/tonne de CO₂, réparti entre la chaleur sensible du solvant, 10%, mais surtout entre la chaleur de vaporisation et la chaleur de réaction entre le CO₂ et la monoéthanolamine, 45% chacune.

Dans le cas où, selon l'invention, on met en oeuvre une amine tertiaire telle que la N,N,N',N',N"-pentaméthyldipropylènetriamine 75% poids en solution aqueuse, un débit de solvant plus important est nécessaire pour réaliser une élimination de 90% du CO₂ initialement présent dans la fumée. La nature tertiaire des fonctions amine de la molécule permet cependant de diminuer la part du coût énergétique lié à la chaleur de réaction entre le CO₂ et l'amine. De plus, en tenant compte du fait que seule une fraction du solvant est régénérée thermiquement, suite à la démixtion de la fraction de solution absorbante riche en espèces carbonatées, la part du coût de régénération liée à la chaleur sensible du solvant n'est pas influencée par l'augmentation du débit du solvant nécessaire à la décarbonatation. Le coût de la régénération est alors réduit à 2,7 GJ/tonne de CO₂.

## Revendications

1. Procédé de désacidification d'un effluent gazeux comportant au moins un composé acide du groupe constitué par l'hydrogène sulfuré (H₂S), les mercaptans, le dioxyde de carbone (CO₂), le dioxyde de soufre (SO₂), l'oxysulfure de carbone (COS) et le di-sulfure de carbone (CS₂), dans lequel on effectue les étapes suivantes :
a) on met en contact l'effluent gazeux avec une solution absorbante de manière à obtenir un effluent gazeux appauvri en composés acides et une solution absorbante chargée en composés acides, la solution absorbante étant choisie pour sa propriété de former deux phases séparables lorsqu'elle absorbe une quantité déterminée de composés acides : une première phase riche en composés acides, une deuxième phase pauvre en composés acides ladite solution absorbante comportant un composé réactif qui réagit avec au moins un desdits composés acides choisi dans le groupe constitué par les amines, et un composé de solvatation qui est l'eau,
b) on sépare la solution absorbante chargée en composés acides en deux fractions : une première fraction de solution absorbante appauvrie en composés acides et une deuxième fraction de solution absorbante enrichie en composés acides,
c) on régénère uniquement la deuxième fraction de manière à libérer une partie des composés acides,
d) on recycle la première fraction de solution absorbante obtenue à l'étape b) et la solution absorbante régénérée obtenue à l'étape c), en tant que solution absorbante à l'étape a).

2. Procédé selon la revendication 1, dans lequel la solution absorbante comporte un sel choisi dans le groupe constitué par les sels d'alcalin, les sels d'alcalino-terreux, les sels de métaux et les sels d'amines.

3. Procédé selon l'une des revendications précédentes, dans lequel à l'étape b), on utilise l'une des techniques de séparation suivantes : décantation, centrifugation, filtration.

4. Procédé selon l'une des revendications précédentes, dans lequel, à l'étape c), on distille la deuxième fraction de solution absorbante de manière à produire une solution absorbante régénérée appauvrie en composés acides en libérant des composés acides sous forme gazeuse.

5. Procédé selon l'une des revendications 1 à 3, dans lequel, à l'étape c), on détend la deuxième fraction de manière à produire un liquide en libérant des composés acides sous forme gazeuse, puis on évacue les composés acides libérés et on sépare le liquide en une première portion de solution absorbante régénérée qui est appauvrie en composés acides et une troisième fraction de solution absorbante.

6. Procédé selon la revendication 5, dans lequel on détend la troisième fraction de solution absorbante de manière à produire une deuxième portion de solution absorbante régénérée appauvrie en composés acides et des composés acides libérés sous forme gazeuse par détente.

7. Procédé selon la revendication 5, dans lequel on distille la troisième fraction de solution absorbante de manière à produire une deuxième portion de solution absorbante régénérée appauvrie en composés acides en libérant des composés acides sous forme gazeuse.

8. Procédé selon l'une des revendications précédentes, dans lequel l'effluent gazeux est choisi dans le groupe constitué par le gaz naturel, le gaz de synthèse, les fumées de combustion, les gaz de raffinerie, les gaz obtenus en queue du procédé Claus, les gaz de fermentation de biomasse.

9. Procédé selon l'une des revendications 1 à 8, appliqué à l'absorption du dioxyde de carbone des fumées de combustion ou du gaz naturel, au traitement des gaz de queue de Claus, ou à la désulfuration du gaz naturel et des gaz de raffinerie, dans lequel on emploie une solution absorbante comportant l'un des couples composés réactifs/composés de solvatation suivants : N,N,N',N',N"-pentaméthyldiéthylènetriamine/eau, N,N,N',N',N"-pentaméthyldipropylènetriamine/eau, N,N-Bis(2,2-diéthoxyéthyl)méthylamine/eau, et N,N-diméthyldipropylènetriamine/eau.

## Patentansprüche

1. Verfahren zur Entsäuerung eines Abgases, das mindestens eine saure Verbindung aus der Gruppe enthält, die aus Schwefelwasserstoff (H₂S), den Mercaptanen, Kohlenstoffdioxid (CO₂), Schwefeldioxid (SO₂), Carbonylsulfid (COS) und Kohlenstoffdisulfid (CS₂) besteht, bei dem die folgenden Schritte durchgeführt werden:
a) das Abgas wird mit einer absorbierenden Lösung in Kontakt gebracht, so dass ein an sauren Verbindungen abgereichertes Abgas und eine mit sauren Verbindungen befrachtete absorbierende Lösung erhalten werden, wobei die absorbierende Lösung wegen ihrer Eigenschaft gewählt wird, zwei trennbare Phasen zu bilden, wenn sie eine bestimmte Menge saurer Verbindungen absorbiert: eine an sauren Verbindungen reiche erste Phase, eine an sauren Verbindungen arme zweite Phase, wobei die absorbierende Lösung eine reaktionsfähige Verbindung, die mit mindestens einer der sauren Verbindungen reagiert, die aus der aus den Aminen bestehenden Gruppe gewählt ist, und eine Solvatationsverbindung, die Wasser ist, enthält,
b) die mit sauren Verbindungen befrachtete absorbierende Lösung wird in zwei Fraktionen getrennt: eine erste Fraktion der absorbierenden Lösung, die an sauren Verbindungen abgereichert ist, und eine zweite Fraktion der absorbierenden Lösung, die an sauren Verbindungen angereichert ist,
c) nur die zweite Fraktion wird regeneriert, so dass ein Teil der sauren Verbindungen freigesetzt wird,
d) die im Schritt b) erhaltene erste Fraktion der absorbierenden Lösung und die im Schritt c) erhaltene regenerierte absorbierende Lösung werden als absorbierende Lösung zum Schritt a) zurückgeführt.

2. Verfahren nach Anspruch 1, bei dem die absorbierende Lösung ein Salz enthält, das aus der Gruppe gewählt ist, die aus den Alkalisalzen, den Erdalkalisalzen, den Metallsalzen und den Aminsalzen besteht.

3. Verfahren nach einem der vorhergehenden Ansprüche, bei dem im Schritt b) eine der folgenden Trenntechniken verwendet wird: Dekantation, Zentrifugation, Filtration.

4. Verfahren nach einem der vorhergehenden Ansprüche, bei dem im Schritt c) die zweite Fraktion der absorbierenden Lösung destilliert wird, so dass eine regenerierte absorbierende Lösung erzeugt wird, die an sauren Verbindungen abgereichert ist, indem saure Verbindungen in gasförmiger Form freigesetzt werden.

5. Verfahren nach einem der Ansprüche 1 bis 3, bei dem im Schritt c) die zweite Fraktion entspannt wird, so dass eine Flüssigkeit erzeugt wird, indem saure Verbindungen in gasförmiger Form freigesetzt werden, dann die freigesetzten sauren Verbindungen abgeführt werden und die Flüssigkeit in einen ersten Teil der regenerierten absorbierenden Verbindung, der an sauren Verbindungen abgereichert ist, und eine dritte Fraktion der absorbierenden Lösung getrennt wird.

6. Verfahren nach Anspruch 5, bei dem die dritte Fraktion der absorbierenden Lösung entspannt wird, so dass ein zweiter Teil der regenerierten absorbierenden Lösung, der an sauren Verbindungen abgereichert ist, und saure Verbindungen, die in gasförmiger Form freigesetzt werden, durch Entspannung erzeugt werden.

7. Verfahren nach Anspruch 5, bei dem die dritte Fraktion der absorbierenden Lösung destilliert wird, so dass ein zweiter Teil der regenerierten absorbierenden Lösung erzeugt wird, der an sauren Verbindungen abgereichert ist, indem saure Verbindungen in gasförmiger Form freigesetzt werden.

8. Verfahren nach einem der vorhergehenden Ansprüche, bei dem das Abgas aus der Gruppe gewählt ist, die aus Erdgas, Synthesegas, Verbrennungsrauchgasen, Raffineriegasen, Restgasen aus dem Claus-Verfahren, Gasen aus der Vergärung von Biomasse besteht.

9. Verfahren nach einem der Ansprüche 1 bis 8, das auf die Absorption des Kohlenstoffdioxids der Verbrennungsrauchgase oder des Erdgases, auf die Behandlung der Claus-Restgase oder auf die Entschwefelung des Erdgases und der Raffineriegase angewandt wird, bei dem eine absorbierende Lösung eingesetzt wird, die eines der folgenden Paare von reaktionsfähigen Verbindungen/Solvatationsverbindungen enthält: N,N,N',N',N"-Pentamethyldiethylentriamin/Wasser, N,N,N',N',N"-Pentamethyldipropylentriamin/Wasser, N,N-Bis(2,2-diethoxyethyl)methylamin/Wasser und N,N-Dimethyldipropylentriamin/Wasser.

## Claims

1. Process for deacidification of a gaseous effluent comprising at least one acidic compound from the group consisting of hydrogen sulfide (H₂S), mercaptans, carbon dioxide (CO₂), sulfur dioxide (SO₂), carbonyl sulfide (COS) and carbon disulfide (CS₂), in which the following steps are carried out:
a) the gaseous effluent is contacted with an absorbent solution so as to obtain a gaseous effluent depleted in acidic compounds and an absorbent solution laden with acidic compounds, the absorbent solution being chosen for its property of forming two separable phases when it absorbs a determined amount of acidic compounds: a first phase rich in acidic compounds, a second phase poor in acidic compounds; said absorbent solution comprising a reactive compound that reacts with at least one of said acidic compounds and is chosen from the group consisting of amines, and a solvation compound which is water,
b) the absorbent solution laden with acidic compounds is separated into two fractions: a first fraction of absorbent solution depleted in acidic compounds and a second fraction of absorbent solution enriched in acidic compounds,
c) only the second fraction is regenerated so as to release a portion of the acidic compounds,
d) the first fraction of absorbent solution obtained in step b) and the regenerated absorbent solution obtained in step c) are recycled to step a) as absorbent solution.

2. Process according to Claim 1, wherein the absorbent solution comprises a salt chosen from the group consisting of alkali metal salts, alkaline earth metal salts, metal salts and amine salts.

3. Process according to either of the preceding claims, wherein one of the following separation techniques is used in step b): settling, centrifugation, filtration.

4. Process according to one of the preceding claims, wherein in step c) the second absorbent solution fraction is distilled so as to produce a regenerated absorbent solution depleted in acidic compounds by releasing acidic compounds in gas form.

5. Process according to one of Claims 1 to 3, wherein in step c) the second fraction is expanded so as to produce a liquid by releasing acidic compounds in gas form, and then the acidic compounds released are discharged and the liquid is separated into a first portion of regenerated absorbent solution which is depleted in acidic compounds and a third absorbent solution fraction.

6. Process according to Claim 5, wherein the third absorbent solution fraction is expanded so as to produce a second portion of regenerated absorbent solution depleted in acidic compounds, and acidic compounds released in gas form by expansion.

7. Process according to Claim 5, wherein the third absorbent solution fraction is distilled so as to produce a second portion of regenerated absorbent solution depleted in acidic compounds by releasing acidic compounds in gas form.

8. Process according to one of the preceding claims, wherein the gaseous effluent is chosen from the group consisting of natural gas, synthesis gas, combustion flue gases, refinery gases, tail gases from the Claus process, biomass fermentation gases.

9. Process according to one of Claims 1 to 8, applied to the absorption of carbon dioxide from combustion flue gases or natural gas, to the treatment of Claus tail gases, or to the desulfurization of natural gas and refinery gases, wherein an absorbent solution comprising one of the following reactant compound/solvation compound pairs is used:
N, N, N', N', N"-pentamethyldiethylenetriamine/water,
N, N, N', N', N"-pentamethyldipropylenetriamine/water,
N,N-bis(2,2-diethoxyethyl)methylamine/water, and
N,N-dimethyldipropylenetriamine/water.
